# EUROPEAN PATENT SPECIFICATION

(11) **EP 0 606 444 B1**
(45) Date of publication and mention of the grant of the patent: **02.01.1997**
(21) Application number: 93916284.8
(22) Date of filing: 23.06.1993
(51) Int. Cl.: H02H 9/04, H05B 39/10

(54) **SERIES CIRCUIT PROVIDED WITH BY-PASS CIRCUITS**
MIT EINER PARALLELSCHALTUNG VERSEHENE SERIENSCHALTUNG
CIRCUIT SERIE POURVU DE CIRCUITS DE CONTOURNEMENT

(30) Priority: 03.07.1992 NL 9201189
(43) Date of publication of application: 20.07.1994
(73) Proprietor: ALGRA FOTOMETAAL B.V., NL-1521 Wormerveer (NL)
(72) Inventor: TIMMERS, Adriaan, NL-1483 BC De Rijp (NL); VAN DALEN, Ary, Hilbert, NL-1825 CP Alkmaar (NL)
(74) Representative: Bakker, Gilles Egbert, Ir.
(86) International application number: NL9300132
(87) International publication number: WO9401911

(56) References cited:
- EP-A- 0 284 592
- EP-A- 0 284 869

## Description

The invention relates to a series circuit of a plurality of electric current consumption units connected in series, such as lamps, heating elements, etcetera, or groups of such units, each consumption unit or each group of consumption units having a by-pass circuit, which will be activated and divert the current in case of failure or breakdown of an accompanying consumption unit during current transporting operation, so that the current going through the series circuit will not be interrupted.

Series lighting, that is, a sequence of lamps connected in series, connected to a current network, is universally applied, among other things for Christmas tree lighting, shop window lighting, signal lighting and the like. Series circuits have numerous advantages over parallel circuits, such as the simple construction, much easier mounting of such a series circuit and the lower costs, such as by thinner wires that can be applied for the wiring.

A disadvantage of the series lighting is that on failure of one lamp or element, the complete series circuit is switched off. Therefore, various types of by-pass circuits for series circuit have been developed, in which bimetals, NTCs or semiconductors are used. There, with each lamp or element, a by-pass circuit is connected in parallel, which circuit takes over the current transport function of a broken down lamp, so that the series circuit will continue functioning.

From EP-A-0 284 592, a semiconductor by-pass circuit is known, which is substantially constituted by a triac, which is connected in parallel with a lamp, in which a threshold value for the trigger voltage of the triac is fixed by coupling a diac and a current limiting device between the switching gate (trigger) and the one current terminal. When the current through the lamp fails, as a result of breaking down of the lamp, this threshold voltage will be exceeded in a very short time, as a result of which the triac will be switched on and the by-pass will be established.

In all types of by-pass circuits known at present, including the one according to the European Patent Application mentioned above, the problem exists, that the by-pass circuit is current-sensitive and uses current of the series circuit for maintaining the by-pass function. This can result in irregularities with fluctuating current consumption and excludes the possibility of using series circuits having such by-pass circuits for more advanced applications such as series lighting having dimming capacity or heating.

A further disadvantage of this circuit is the fact that it switches after each zero-axis crossing. Due to this, harmonics are generated which can only be kept out of the network by relatively expensive L/C mains filters.

The object of the invention is to provide a by-pass circuit in which these difficulties do not occur.

To that end, the invention provides for a series circuit with by-pass circuits as described above, characterized in that each by-pass circuit has at least one switch that is switched on by the voltage rise through the by-pass on cut-off of the current through its consumption unit and which, regardless of the current intensity through the series circuit, is kept in switched-on condition by the hold-function of a memory element, and which switch can only be switched back by an external signal.

The advantage of this system is that the memory element, e.g. a bi-stable element such as a charged or uncharged capacitor, a bi-stable relay or a bi-stable semiconductor element, remains in operation and keeps the switch switched on, regardless of the current condition, independent of the current or voltage condition in the series circuit. This means, that even when the current is completely cut off, the by-pass over the defective lamp will remain existent. By means of an external signal the hold-function of the memory element can be cancelled again, and the switch must be switched back when the by-pass is to be switched off. Thus, the system operates independent of the current intensity through the circuit and uses no current itself, except when switching on. On account of the fact that no switching occurs in the stationary state, there is no generation of net interference, so that expensive filters for filtering them away are not required.

Such a series circuit is pre-eminently suitable to be applied in a series circuit of lamps having controllable light intensity, for example, - such as for advertising purposes and shop window lighting - or heating elements. Until now, with lamps connected in parallel, light control has taken place by voltage control, but by the invention it is now possible to employ a series circuit in which the light intensity is controlled by an electronically controlled current regulation. This offers great advantages, in particular with modern lighting, such as halogen lamps, which are pre-eminently suitable for being dimmed by current regulation. Furthermore, electronic current regulation can take place very effectively by modern electronics in the shape of integrated circuits (chips).

In a simple embodiment of the by-pass circuit, an electromechanical switch is used. It is cheap and can be constructed in many embodiments.

According to a further embodiment of the invention, the by-pass circuit has a switching transistor as switch, such as a MOS FET, the current supply or discharge of which is connected to the switching gate through a charging capacitor connected to a controlled charging circuit which is connected over the consumption unit. The charging circuit can effectively consist of a semiconductor chip.

It can be effective to provide this charging circuit with a switching element, which for terminating the diversion of current across the by-pass circuit shorts the charging capacitor through mechanical or electronic operation.

The switching element can be constituted by an optoelectronic semiconductor coupling, in which a light-sensitive transistor is switched by a light emitting diode (LED).

According to a further embodiment, particularly intended for alternating current application, the design can be such, that the by-pass circuit has two anti-series connected MOS FETs as switch, the switching gates of which are connected with each other and with the one side of the charging capacitor, and the node of the MOS FETs with the other side of the capacitor.

With the series circuit according to the invention it is possible to provide a dimmable series lighting, for example of halogen lamps, characterized by an electronic current regulation connected to a series circuit of lamps having by-pass circuits as described above.

The invention will be explained further by means of examples, illustrated in the drawing, in which:
Fig. 1 shows a functional block diagram of a by-pass circuit according to the invention;
Fig. 2 shows a functional block diagram of a second embodiment;
Fig. 3 shows a switching diagram of a further embodiment of a by-pass circuit according to the invention;
Fig. 4 shows a diagram of the electric portion of an electromechanical bi-stable switch.

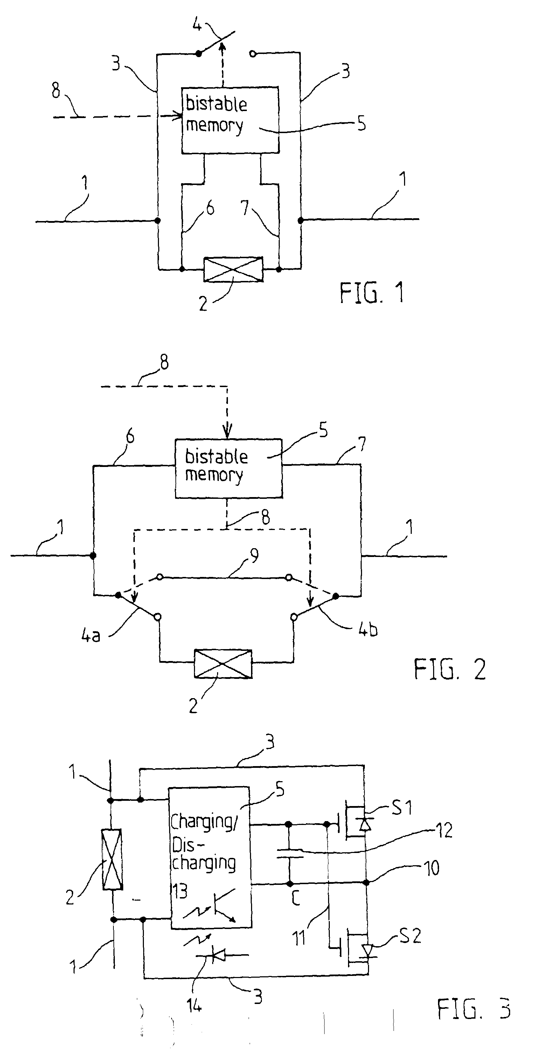

In Fig. 1, 1 indicates a series circuit in which a number of charges have been connected in series. Of the charges only one has been shown and indicated with 2. This charge 2 can be a halogen lamp for example, and on failure of this lamp 2, the current would be interrupted by the series circuit, had a by-pass line 3 not been provided.

In this by-pass line 3, there is a switch 4, which is to be closed on failure of the lamp 2.

To that end, a regulating element 5 has been provided, which has been connected to both sides of the lamp 2 by means of the control lines 6, 7. The regulating element 5 has a bi-stable memory, so that it can keep the switch 4 open as long as current goes through the lamp 2. On interruption of the current, the bi-stable memory brings the g switch 4 into the closed position and keeps it therein. Thus, the memory has a hold-function so that, regardless of current variations through the series circuit, the switch 4 remains closed and the current will continue to flow through the circuit under all circumstances.

Interruption of the current by the by-pass line 3 can take place exclusively by means of an external reset signal, indicated with 8, through which the bi-stable memory is switched back to its original position in which the switch 4 is open. The reset signal 8 can both be supplied by hand and mechanically.

As mentioned above, the bi-stable memory element can be designed electromechanically such as in the shape of a bi-stable relay, but it can also be a semiconductor element. Through a voltage signal, which occurs when the lamp 2 becomes defective, the bi-stable relay can be brought into the position in which the switch 4 is in the closed position. After that, the switch 4 can be brought back into the open position by an external signal, for example generated by pressing a button as a result of which a voltage pulse will be generated, or in any other way.

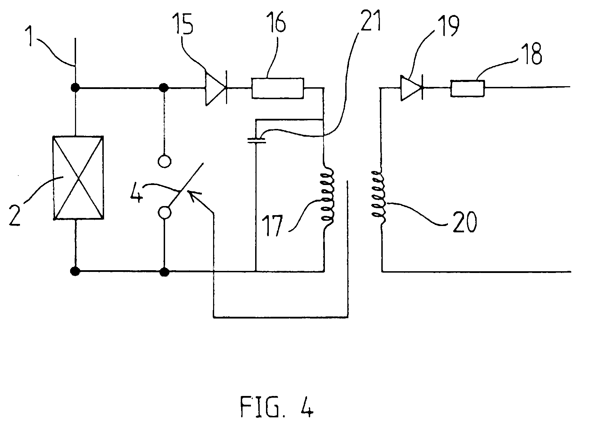

Fig. 2 shows an embodiment which largely corresponds to that of Fig. 1. However, two switches 4a and 4b situated in the lines running to and from the lamp 2 are employed here. In one position, the switches 4a and 4b keep the series circuit 1 closed and in the other position - indicated with dash lines - they interrupt this circuit and provide for establishment of the by-pass line 9. The advantage of this embodiment is, that in case of failure, the lamp 2 is completely isolated from the current transporting lines, which gives extra security in replacing the defective lamp 2.

Fig. 3 shows a switching diagram of an embodiment of the invention in which two power MOS FETs S1 and S2 being anti-series connected in the by-pass line 3. Their current supplies have been connected in the node 10 and a connecting line 11 has been provided between the switching gates of the MOS FETs. Between the line 11 and the node 10 there is the capacitor 12, which is connected to the control element 5, here comprising a charging-/uncharging circuit in the shape of an integrated circuit (chip).

This circuit operates as follows: when the series circuit is in operation, that is, connected to the electricity mains, and all lamps 2 are burning, the MOS FETs S1 and S2 are in non-conductive condition and the current normally goes through the lamps 2. When a lamp becomes defective, a higher voltage arises over this lamp, as a result of which the control element 5 is switched on and the capacitor 12 is charged. Owing to this, the MOS FETs in the by-pass circuit 3 become conductive and the current is led around the lamp 2 concerned.

Fig. 3 shows the possibility to have the cut-off of the by-pass line occur by means of an optoelectronic signalling. To that end, a light-sensitive transistor 13 has been incorporated in the integrated circuit 5, which transistor constitutes a switching element and is controlled by the light of an LED (light emitting diode) 14 operable from the outside. On closing the light-sensitive transistor 13, the capacitor 12 will be shorted, as a result of which the MOS FETs S1 and S2 get into their non-conductive condition, so that the current can go through the lamp 2 again.

The great advantage of such a circuit is that it creates the possibility to make series circuits of lamps, halogen lamps for example, dimmable. Dimming of halogen lamps has great advantages, because varying light intensities can be obtained by varying currents, which is of particular importance for realizing special lighting effects. Until now, dimming circuits could in fact only be applied in parallel circuits of lamps, which is more extensive and more expensive. Small-sized electronic circuits can be used for current regulation and lamp series can be operated relatively universally in the very diverse ways.

By means of resistors the appearing maximum currents and voltages are limited, and by diodes it is arranged that the set and reset signal do not coincide, by using the succesive polarity changes of the AC supply voltage, so the mains voltage. Thus, the set signal can occur at the positive sine half, and the reset signal at the negative sine half.

Fig. 4 shows the electrical part of an electromechanic bi-stable switch, which in turn is indicated by 4. The part shown in this figure consists of the diode 15, the resistor 16, the capacitor 21 and the coil 17, that provides for possibly closing the switch 4 when a set signal occurs. In cooperation with the self-induction of the coil 17, the capacitor 21 arranges that the set coil 17 will not reverse the switch 4 on occurring pulse-shaped high voltages over the load 2. Besides, mechanical audible vibration of the switching contact 4 is avoided on repeated occurence of these loads, which is the case with forms of phase-cutting for varying the energy in load 2. By means of the resistor 18,.the diode 19 and the coil 20, a reset signal for opening the switch 4 again can be supplied. The further magnetic parts have not been indicated.

It will be obvious, that only a few possible embodiments of a device according to the invention have been illustrated in the drawing and described above, and that many changes can be made without being beyond the scope of the invention as defined in the claims.

## Claims

1. Series circuit (1) of a plurality of electric current consumption units (2) connected in series, such as lamps, heating elements, etcetera, or groups of such consumption units (2), each consumption unit (2), or each group of consumption units (2) having a by-pass circuit (5), which will be activated to divert the current in case of failure or breakdown of an accompanying consumption unit (2) during current transporting operation, so that the current going through the series circuit will not be interrupted, characterized in that each by-pass circuit has at least one switch (4, 4a, 4b, S1, S2) which is switched on by the voltage rise over the by-pass (3, 9) on cut-off of the current through its consumption unit (2) and which, regardless of the current intensity through the series circuit (1), is kept in switched-on condition by the hold-function of a memory element (5), and which switch can only be switched back by an external signal (8).

2. Series circuit (1) according to claim 1, characterized in that an electromechanical switch is used for the by-pass circuit (5).

3. Series circuit (1) according to claim 1, characterized in that the by-pass circuit (5) has a switching transistor as switch, such as a MOS FET, the current supply or discharge of which is connected to the switching gate through a charging capacitor connected to a controlled charging circuit which is connected over the consumption unit (2).

4. Series circuit (1) according to claim 3, characterized in that the charging circuit has been provided with a switching element, which for terminating the diversion of current over the by-pass circuit shorts the charging capacitor through mechanical or electronical operation.

5. Series circuit (1) according to claim 4, characterized in that the switching element is constituted by an optoelectronic semiconductor-signalization.

6. Series circuit (1) according to one of claims 3-5, characterized in that the by-pass circuit (5) has two anti-series connected MOS FETs (S1, S2) as switch the switching gates of which are connected with each other and with the one side of the charging capacitor (12), and the node (10) of the MOS FETs with the other side of the capacitor.

7. Series circuit (1) according to one of the preceding claims, characterized in that resistors and diodes have been incorporated in the by-pass circuit, to prevent a set and reset signal from coinciding and to prevent overloading by using the succesive polarity changes of the AC supply voltage.

8. Series circuit (1) according to one of the preceding claims, characterized in that it comprises a series circuit of dimmable lamps, e.g. halogen lamps, and an electronic current regulation connected to the series circuit (1).

## Patentansprüche

1. Mit einer Parallelschaltung versehene Serienschaltung (1) einer Vielzahl von elektrischen Strom verbrauchenden Einheiten (2), wie Lampen, Heizelementen etc. oder Gruppen solch verbrauchender Einheiten (2), wobei jede verbrauchende Einheit (2) oder jede Gruppe von verbrauchenden Einheiten (2) eine Nebenschlußschaltung (5) aufweist, die aktivierbar ist, um den Strom bei Auftreten eines Fehlers oder eines Versagens einer zugehörigen verbrauchenden Einheit (2) während des Stromflusses umzulenken, so daß der durch die Serienschaltung fließende Strom nicht unterbrochen wird,
**dadurch gekennzeichnet,**
daß jede Nebenschlußschaltung mindestens einen Schalter (4, 4a, 4b, S1, S2) aufweist, der durch den Spannungsanstieg über den Nebenschluß (3, 9) bei Ausschalten des durch seinen verbrauchende Einheit (2) fließenden Stroms einschaltbar ist, und der unabhängig von der Stärke des Stroms durch die Serienschaltung (1) durch die Haltefunktion eines Speicherelements (5) im eingeschalteten Zustand gehalten wird, wobei der Schalter nur durch ein externes Signal (8) zurückschaltbar ist.

2. Serienschaltung (1) nach Anspruch 1, dadurch gekennzeichnet, daß ein elektromechanischer Schalter für die Nebenschlußschaltung (5) vorgesehen ist.

3. Serienschaltung (1) nach Anspruch 1, dadurch gekennzeichnet, daß die Nebenschlußschaltung (5) einen Schalt-Transistor als Schalter aufweist wie einen MOS FET, dessen Stromzu- oder -abführung mit dem Schalttor durch einen Ladekondensator verbunden ist, der mit einer gesteuerten Ladeschaltung verbunden ist, die über die verbrauchende Einheit (2) verbunden ist.

4. Serienschaltung (1) nach Anspruch 3, dadurch gekennzeichnet, daß die Ladeschaltung mit einem Schaltelement versehen ist, das zum Beenden der Umlenkung des Stroms über die Nebenschlußschaltung den Ladekondensator durch einen mechanischen oder elektronischen Vorgang kurzschließt.

5. Serienschaltung (1) nach Anspruch 4, dadurch gekennzeichnet, daß das Schaltelement durch eine opto-elektronische Halbleiter-Signalgebung gebildet ist.

6. Serienschaltung (1) nach einem der Ansprüche 3 bis 5, dadurch gekennzeichnet, daß die Nebenschlußschaltung (5) zwei entgegengesetzt in Reihe verbundene MOS FETs (S1, S2) als Schalter aufweist, deren Schalttore miteinander und mit der einen Seite des Ladekondensators (12) verbunden sind, wobei der Knoten (10) der MOS FETs mit der anderen Seite des Kondensators verbunden ist.

7. Serienschaltung (1) nach einem der vorhergehenden Ansprüche, dadurch gekennzeichnet, daß Widerstände und Dioden in der Nebenschlußschaltung vorhanden sind, um ein Überschneiden eines Stell- und Rückstellsignals zu verhindern, und um eine Überlast durch Benutzung der sukzessiven Polaritätswechsel der Wechselversorgungsspannung zu verhindern.

8. Serienschaltung (1) nach einem der vorhergehenden Ansprüche, dadurch gekennzeichnet, daß sie eine Serienschaltung von dimmfähigen Lampen umfaßt, z.B. Halogenlampen, und eine elektronische Stromsteuerung, die mit der Serienschaltung (1) verbunden ist.

## Revendications

1. Circuit série (1) d'une multiplicité d'éléments consommateurs de courant électrique (2) montés en série, tels que des lampes, des éléments chauffants, etc., ou de groupes de tels éléments consommateurs (2), chaque élément consommateur (2) ou chaque groupe d'éléments consommateurs (2) ayant un circuit de dérivation (5) qui est activé pour détourner le courant en cas de défaillance ou de claquage d'un élément consommateur associé (2) pendant l'opération de transport de courant, de sorte que le courant circulant dans le circuit série ne soit pas interrompu, caractérisé par le fait que chaque circuit de dérivation a au moins un interrupteur (4, 4a, 4b, S1, S2) qui est fermé par la croissance de la tension dans la dérivation (3, 9) à la coupure du courant dans l'élément consommateur (2) associé et qui, quelle que soit l'intensité du courant dans le circuit série (1), est maintenu dans une condition de fermeture par la fonction de maintien d'un élément de mémoire (5), et ledit interrupteur ne pouvant être rouvert que par un signal extérieur (8).

2. Circuit série (1) selon la revendication 1, caractérisé par le fait qu'un interrupteur électromécanique est utilisé pour le circuit de dérivation (5).

3. Circuit série (1) selon la revendication 1, caractérisé par le fait que le circuit de dérivation (5) a comme inter rupteur un transistor de commutation, par exemple un MOSFET, dont l'alimentation en courant ou la décharge est reliée à la grille de commutation par l'intermédiaire d'un condensateur de charge relié à un circuit de charge commandé qui est monté sur l'élément consommateur (2).

4. Circuit série (1) selon la revendication 3, caractérisé par le fait que le circuit de charge est pourvu d'un élément de commutation qui, pour mettre fin au détournement du courant sur le circuit en dérivation, court-circuite le condensateur de charge par fonctionnement mécanique ou électronique.

5. Circuit série (1) selon la revendication 4, caractérisé par le fait que l'élément de commutation est constitué d'une signalisation optoélectronique à semiconducteur.

6. Circuit série (1) selon l'une des revendications 3 à 5, caractérisé par le fait que le circuit de dérivation (5) a comme interrupteur deux MOSFET montés en opposition (S1, S2) dont les grilles de commutation sont reliées entre elles et à un côté du condensateur de charge (12), et le noeud (10) desdits MOSFET est relié à l'autre côté de ce condensateur.

7. Circuit série (1) selon l'une des revendications précé dentes, caractérisé par le fait que des résistances et des diodes sont incorporées au circuit de dérivation pour empêcher la coïncidence d'un signal de mise à 1 et mise à 0 et empêcher une surcharge par utilisation des change ments de polarité successifs de la tension alternative d'alimentation.

8. Circuit série (1) selon l'une des revendications précé dentes, caractérisé par le fait qu'il comprend un circuit série de lampes gradables, par exemple de lampes à halogè nes, et une régulation de courant électronique reliée au circuit série (1).
